# EUROPÄISCHE PATENTSCHRIFT

(11) **EP 3 052 307 B1**
(45) Veröffentlichungstag und Bekanntmachung des Hinweises auf die Patenterteilung: **06.11.2024**
(21) Anmeldenummer: 14761626.2
(22) Anmeldetag: 08.09.2014
(51) Int. Cl.: B29C 73/04, B60S 5/00, B62D 29/04, B62D 41/00, B29C 73/26, B62D 25/02

(54) **FAHRZEUGBAUTEIL AUS FASERVERSTÄRKTEM KUNSTSTOFF UND VERFAHREN ZUM REPARIEREN VON BESCHÄDIGTEN FAHRZEUGBAUTEILEN AUS FASERVERSTÄRKTEM KUNSTSTOFF**
VEHICLE COMPONENT MADE OF FIBRE-REINFORCED PLASTIC AND METHOD FOR REPAIRING DAMAGED VEHICLE COMPONENTS MADE OF FIBRE REINFORCED PLASTIC
COMPOSANT DE VÉHICULE EN PLASTIQUE RENFORCÉ DE FIBRES ET PROCÉDÉ POUR RÉPARER DES COMPOSANTS DE VÉHICULE ENDOMMAGÉS EN PLASTIQUE RENFORCÉ DE FIBRES

(30) Priorität: 01.10.2013 DE 102013219963
(43) Veröffentlichungstag der Anmeldung: 10.08.2016
(73) Patentinhaber: Bayerische Motoren Werke Aktiengesellschaft, 80809 München (DE)
(72) Erfinder: SCHNAUFER, Thomas, 82386 Oberhausen (DE); BEIL,Andreas, 80935 München (DE); HUBER, Markus, 84109 Woerth (DE)
(86) Internationale Anmeldenummer: PCT/EP2014/069042
(87) Internationale Veröffentlichungsnummer: WO 2015/049088

(56) Entgegenhaltungen:
- EP-A2- 1 593 860
- DE-A1- 102009 024 829
- DE-A1- 102010 053 958
- DE-A1- 2 548 398

## Beschreibung

Die vorliegende Erfindung betrifft ein Fahrzeugbauteil aus faserverstärktem Kunststoff mit einer Matrix aus duroplastischem oder thermoplastischem Material und Verstärkungsfasern, die in der Matrix angeordnet sind.

Die Rohkarosserien heutiger Fahrzeuge werden aus metallischen Blechen zusammengesetzt, wobei gemäß dem Stand der Technik bevorzugt Bleche aus Stahl verwendet werden. Um jedoch das Gesamtgewicht eines Fahrzeuges zu reduzieren und damit ökologische Gesichtspunkte wie Fahrzeugverbrauch und Recyclingfähigkeit zu verbessern, wurde in letzter Zeit Aluminium als Werkstoff für solche Bleche eingesetzt.

Alternativ dazu werden Karosserien und deren Strukturbauteile zunehmend aus Faserverstärkten Kunststoffen gebildet. Die Reparatur von beschädigten Faserverbundbauteilen (FVB) bringt jedoch eine Reihe neuer Herausforderungen mit sich. Während Blechteile an nahezu jeder beliebigen Stelle durchtrennt und dann mit einem Ersatzteil zusammengeschweißt werden können, ist dies bei Faserverbundbauteilen nicht der Fall. Die mechanischen Eigenschaften wie Steifigkeit, Stabilität usw. dieser Bauteile werden maßgeblich von den darin eingebetteten Fasern realisiert. Durch das Durchtrennen der Fasern werden die mechanischen Eigenschaften der Bauteile stark beeinflusst. Das Einsetzen eines Reparaturteils führt nicht zu einem Bauteil, das die ursprünglichen Eigenschaften aufweist.

Aus der DE 10 2010 053 958 A1 ist eine Karosserie eines Personenkraftwagens bekannt, welche eine Mehrzahl von miteinander verbundenen Karosseriebauteilen umfasst, welche zumindest teilweise mit einem Kunststoff versehen sind, wobei an der Karosserie eine Mehrzahl von vorbestimmten Reparaturtrennstellen vorgesehen sind.

Die EP 1 593 860 A2 beschreibt ein Verbundbauteil bestehend aus wenigstens einem Formteil aus Metall oder Kunststoff mit wenigstens zwei übereinander liegenden Durchbrüchen, welche mittels einer Nietverbindung aus angespritztem thermoplastischem Kunststoff miteinander verbunden sind, wobei der Nietkopf eine Sollbruchstelle aufweist.

In der DE 10 2009 024 829 A1 wird ein crashoptimierter Biegeträger einer Karosseriestruktur eines Fahrzeugs vorgeschlagen, der aus einem Werkstoff geringer Duktilität besteht und durch ein geschlossenes oder offenes Hohlprofil gebildet ist.

Die Offenlegungsschrift DE 25 48 398 A1 bezieht sich auf ein Kraftfahrzeug mit Außenteile bildenden Aufbauwandungen aus Kunststoff.

Ausgehend von diesem Stand der Technik macht es sich die vorliegende Erfindung zur Aufgabe, ein Fahrzeugbauteil sowie ein Verfahren zum Reparieren eines solchen Fahrzeugbauteils anzugeben, mit dem die Nachteile des Standes der Technik überwunden werden.

Diese Aufgabe wird durch ein Fahrzeugbauteil mit den Merkmalen des unabhängigen Anspruchs 1 gelöst, sowie durch ein Verfahren mit den Merkmalen des unabhängigen Anspruchs 3.

Die abhängigen Ansprüche stellen vorteilhafte Ausführungsformen der Erfindung dar.

Zur Lösung dieser Aufgabe schlägt die Erfindung ein Fahrzeugbauteil aus faserverstärktem Kunststoff mit einer Matrix aus duroplastischem oder thermoplastischem Material und Verstärkungsfasern, die in der Matrix angeordnet sind. Auf der Oberfläche des Fahrzeugbauteils ist mindestens eine Reparaturmarkierung vorgesehen. Dadurch sind vorbestimmte Stellen definiert, an denen das Fahrzeugbauteil durchtrennt werden kann im Falle einer Beschädigung. An diesen Stellen lässt sich das Fahrzeugbauteil durchtrennen und ein Reparaturteil einsetzen, so dass die mechanischen Eigenschaften des reparierten Fahrzeugbauteils sich nur geringfügig von denen des ursprünglichen, unbeschädigten Fahrzeugbauteils unterscheiden. Als Fasern eignen sich insbesondere Kohlenstofffaser, Glasfasern, Aramid und/oder Basaltfasern.

Darüber hinaus kann die Reparaturmarkierung als ein lokaler Vorsprung und/oder als eine lokale Vertiefung aus reinem Matrixmaterial ausgebildet sein. Dies bietet den Vorteil, dass bei der Herstellung des Bauteils die Bauteilaufnahme einstückig mit dem Bauteil ausgebildet werden können. Das heißt bei der Herstellung des Bauteils, wird eine mit Harz vorgetränkte Fasermatte in einem Werkzeug umgeformt und dabei das Harz ausgehärtet bzw. erstarrt. In dieser Form ist eine werkzeugfallende Reparaturmarkierung als vorspringender Bereich oder als sich vertiefender Bereich realisiert werden. Neben dem im Vorhergehenden beschriebenen Nasspressverfahren, können die Reparaturmarkierungen auch an einem Fahrzeugbauteil ausgebildet werden, dass in einem Resin-Transfer-Moulding-Verfahren (RTM) hergestellt wird. Bei diesem Verfahren wird eine nicht vorimprägnierte, d.h. eine trockene Fasermatte in ein RTM-Werkzeug eingelegt und anschließend mit Harz durchtränkt. Die eine Kavität ausbildende innere Wand des RTM-Werkzeugs weißt Vertiefungen und/oder Vorsprünge als negativ auf, die sich als positiv auf der Oberfläche des in dem RTM-Werkzeug hergestellten Fahrzeugbauteil abbilden. In beiden Verfahrensvarianten werden die Reparaturmarkierungen werkzeugfallend realisiert.

In einem weiteren Aspekt betrifft die Erfindung ein Verfahren zum Reparieren eines beschädigten Fahrzeugbauteils aus faserverstärktem Kunststoff mit den Schritten Identifizieren eines beschädigten Bereichs, Identifizieren von Reparaturmarkierungen, die den beschädigten Bereich von nicht beschädigten Bereichen abgrenzen, Heraustrennen des beschädigten Bereichs an der Reparaturmarkierung, Einsetzen eines Reparaturteils und Verbinden des Reparaturteils mit den unbeschädigten Bereichen. Vorteilhafterweise ist damit an dem Fahrzeugbauteil unmittelbar erkennbar, an welchen Stellen dieses Durchtrennt werden kann. Somit kann auf die Verwendung von Schablonen, um definierte Trennabschnitte realisieren zu können, verzichtet werden.

Das Heraustrennen des beschädigten Bereichs kann durch mechanisches Durchtrennen des Fahrzeugbauteils entlang der Reparaturmarkierung erfolgen, insbesondere durch Sägen, Trennschleifen, Wasserstrahlschneiden oder Lasern.

Weiterhin kann das Reparaturteil auf Stoß zwischen die unbeschädigten Bereiche des Fahrzeugbauteils eingebracht werden. Dadurch kann an der reparierten Fahrzeugbauteil ein glatter Übergang an den Fügestellen erzeugt werden, wodurch die Reparatur optisch kaschiert wird.

Alternativ dazu kann das Reparaturteil derart mit den unbeschädigten Bereichen des Fahrzeugbauteils verbunden werden, dass es diese zumindest abschnittsweise überlappt. Dies bietet den Vorteil einer mechanisch festen Verbindung zwischen dem Reparaturteil und den unbeschädigten Bereichen, da die sich überlappenden Bereiche eine größere Überdeckungsfläche aufweisen, im Vergleich zu einer Ausrichtung auf Stoß.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind.

Es zeigen in schematischer Darstellung:
- - Fig. 1: eine Seitenansicht auf einen Seitenrahmen eines Kraftfahrzeugs,
- - Fig. 2: eine Seitenansicht eines Reparaturteils,
- - Fig. 3a: eine Schnittansicht durch ein repariertes Fahrzeugbauteil und
- - Fig. 3b.: eine Detailansicht des Details D aus Figur 3a.

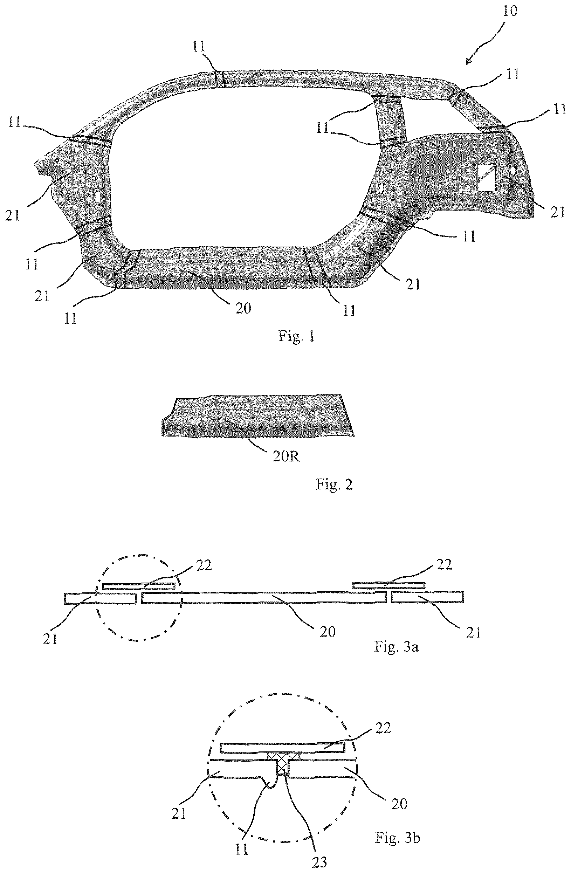

In Fig. 1 ist ein Fahrzeugbauteil 10 in Form eines Seitenrahmens eines Kraftfahrzeugs gezeigt. Dieser Seitenrahmen ist aus faserverstärktem Kunststoff ausgebildet. Der Seitenrahmen kann einteilig als ein einzelnes Fahrzeugbauteil 10 ausgebildet sein oder aus mehreren einzelnen Fahrzeugbauteilen gefügt sein. Fig. 1 zeigt eine Seitenansicht auf ein Bauteil 10 gemäß der vorliegenden Erfindung. Im Sinne dieser Erfindung sind Fahrzeugbauteile Fahrzeugstrukturbauteile wie bspw. Seitengerippe, Dachspriegel, Seitenrahmen, Seitenschweller, A-, B-, oder C-Säulen, Unterbodenverkleidungen, Dachelemente usw.

Der Seitenrahmen 10 weißt eine Mehrzahl von Reparaturmarkierungen 11 auf, die in der Figur 1 als Doppelstriche dargestellt sind. Diese Reparaturmarkierungen 11 sind bevorzugt als Erhebungen bzw. Vorsprünge in Form von Anrisslinien ausgebildet. Die Reparaturmarkierungen 11 sind in Reinharzgeometrie ausgebildet. Das heißt, im Bereich der Reparaturmarkierungen 11 weist das Bauteil 10 nur Matrixmaterial auf, das nicht mit Fasern verstärkt ist. Da die Fasern nicht durch die Reparaturmarkierungen 11 verlaufen, bietet dies den Vorteil, dass diese Markierungen 11 in einer Vielzahl von Geometrieen designt werden können, ohne Rücksicht nehmen zu müssen auf Faserverläufe und dergleichen. Der Gestaltungsfreiraum wird dadurch wesentlich erhöht. Selbstverständlich können in diesem Bereich 11 auch Fasern vorgesehen sein. In diesem Fall sind jedoch fasergerechte Konstruktionsrandbedingungen zu beachten.

Die Reparaturmarkierungen 11 begrenzen einzelne Bereiche 21 des Fahrzeugbauteils zueinander. Rein beispielhaft und nur zur Erläuterung der Erfindung ist der untere Bereich des Seitenrahmens 10 als ein beschädigter Bereich 20 dargestellt, wobei in Figur 1 die Beschädigung nicht erkennbar ist. Eine Beschädigung kann jedoch auch an einem der hier nicht beschädigten Bereiche 12 auftreten.

Der beschädigte Bereich 20 wird aus dem Seitenrahmen 10 herausgetrennt, beispielsweise mittels eines spanabhebenden Werkzeugs wie einem Trennschleifer oder einem Wasserstrahlschneider. Dabei wird entlang des Verlaufs der Reparaturmarkierungen 11 der Seitenrahmen 10 aufgetrennt und der beschädigte Bereich 20 entfernt. Danach werden die Klebeflächen angeschliffen und gegebenenfalls gereinigt.

Ein beispielhaftes Reparaturteil 20R ist in Fig. 2 abgebildet. Dieses Teil entspricht geometrisch ungefähr dem beschädigten und herausgetrennten Bereich 20 und wird in einer ersten Variante des Reparaturverfahrens auf Stoß zwischen die unbeschädigten Bereiche 21 des Fahrzeugbauteils 10 eingesetzt. Um eine belastbare Verbindung zwischen dem Reparaturteil 20R und den unbeschädigten Bereichen 20 zu erzeugen, werden Stützbauteile 22 verwendet. Diese Stützbauteile 22 verbinden das Reparaturteil 20R mit den benachbarten unbeschädigten Bereichen 20, wobei je ein Stützbauteil 22 einen Teil des unbeschädigten Bereichs 20 und einen Teil des Reparaturteils 20R zumindest abschnittsweise überlappt, wie in den Figur 3a und 3b gezeigt. Vor dem Einbringen des Reparaturteils 20R werden die Stützbauteile 22 auf das zu reparierende Fahrzeugbauteil 10 aufgeklebt. Danach wird der Reparaturabschnitt, bzw. das Reparaturteil 20R mit dem Fahrzeugbauteil 10 und den Stützbauteilen 22 verklebt. Abschließend kann das Strukturbauteil 10 von Klebstoffresten gereinigt werden. Wie aus Figur 3b ersichtlich ist, haften das Reparaturteil 20R, der unbeschädigte Bereich 21 und das Stützbauteil 22 über eine Klebstoffnaht 23 aneinander. Das Stützbauteil 22 kann als Kupplungselement, beispielsweise aus Stahl, Aluminium oder aus faserverstärktem Kunststoff ausgebildet sein.

In einem alternativen Reparaturverfahren wird das Reparaturbauteil 20R derart mit dem Fahrzeugbauteil 10 verbunden, dass es die unbeschädigten Bereiche 20 zumindest abschnittsweise überlapp. In dieser Verfahrensvariante, ist das Reparaturteil 20R geometrisch größer als die Lücke die der beschädigte Bereich 20 in dem Seitenrahmen hinterlässt.

In beiden Reparaturverfahren werden für alle Bereiche 21 entsprechende Reparaturteile vorgehalten. Mit anderen Worten: die Instandsetzungsbetriebe haben eine Auswahl an vorgefertigten Reparaturteil, die als Ersatzteile verwendbar sind und können sich so direkt an den Reparaturmarkierungen orientieren ohne Schablonen verwenden zu müssen.

Die Fahrzeugbauteile 10 werden im Allgemeinen im Resin-Transfer-Molding-Verfahren (RTM) hergestellt. In diesem Verfahren wird eine trockene Fasermatte in ein RTM-Werkzeug eingelegt und anschließend mit Harz infiltriert. Durch Vorsehen eines Dorns oder einer Vertiefung auf der Oberfläche des RTM-Werkzeugs als Negativ kann ein entsprechendes Positiv in dem Bauteil generiert werden, wobei nur Harz in diese Aussparung der Kavität des RTM-Werkzeuges gelangt, ohne dass Fasern mit eingebracht werden.

Alternativ zum RTM-Verfahren, können faserverstärkte Fahrzeugbauteile 10 auch im sogenannten Nasspressverfahren hergestellt werden. In diesem Verfahren wird ein vorimprägniertes Rohteil, bspw. eine vorimprägnierte Fasermatte, ein sogenanntes Prepreg in ein Presswerkzeug eingelegt. Anschließend wird mit dem Presswerkzeug umgeformt und mit Druck und/oder Temperatur beaufschlagt, damit die Matrix aushärtet. Im diesem Verfahren müssen in dem Umformwerkzeug ebenfalls Vertiefungen oder Vorsprünge vorgesehen sein. Diese Vorsprünge verdrängen die Fasern in der Matte und formen nur das Harz um. Dadurch kann beim Aushärten in diesem Bereich eine Reinharzgeometrie erzeugt werden.

## Patentansprüche

1. Fahrzeugbauteil (10) aus faserverstärktem Kunststoff mit:
- einer Matrix aus duroplastischem oder thermoplastischem Material und
- Verstärkungsfasern, die in der Matrix angeordnet sind,
wobei
auf der Oberfläche des Fahrzeugbauteils mindestens eine Reparaturmarkierung (11, 12) vorgesehen ist,
**dadurch gekennzeichnet, dass**
die Reparaturmarkierung werkzeugfallend ausgebildet ist.

2. Fahrzeugbauteil (10) nach Anspruch 1, **dadurch gekennzeichnet, dass** die Reparaturmarkierung als ein lokaler Vorsprung (11) und/oder eine lokale Vertiefung (12) aus reinem Matrixmaterial ausgebildet ist.

3. Verfahren zum Reparieren eines beschädigten Fahrzeugbauteils (10) aus faserverstärktem Kunststoff mit den Schritten:
- Identifizieren eines beschädigten Bereichs (20),
- Identifizieren von Reparaturmarkierungen (11), die den beschädigten Bereich (20) von nicht beschädigten Bereichen (21) abgrenzen,
- Heraustrennen des beschädigten Bereichs (20) an der Reparaturmarkierung (11),
- Einsetzen eines Reparaturteils (20R) und
- Verbinden des Reparaturteils (20R) mit den unbeschädigten Bereichen (21),
**dadurch gekennzeichnet, dass**
die Reparaturmarkierung werkzeugfallend ausgebildet ist.

4. Verfahren nach Anspruch 3, **dadurch gekennzeichnet, dass** das Heraustrennen des beschädigten Bereichs (21) durch mechanisches Durchtrennen des Fahrzeugbauteils (10) entlang von Reparaturmarkierungen (11), insbesondere durch Sägen, Trennschleifen, Wasserstrahlschneiden oder Lasern erfolgt.

5. Verfahren nach einem der Ansprüche 3 oder 4, **dadurch gekennzeichnet, dass**
das Reparaturteil (20R) auf Stoß zwischen die unbeschädigten Bereiche (21) des Fahrzeugbauteils (10) eingebracht wird.

6. Verfahren nach einem der Ansprüche 3 oder 4, **dadurch gekennzeichnet, dass**
das Reparaturteil (20R) derart mit den unbeschädigten Bereichen (21) des Fahrzeugbauteils (10) verbunden wird, dass es diese zumindest abschnittsweise überlappt.

## Claims

1. Vehicle component (10) made of fibre-reinforced plastic comprising:
- a matrix of thermosetting or thermoplastic material and
- reinforcing fibres, which are arranged in the matrix,
wherein
at least one repair marker (11, 12) is provided on the surface of the vehicle component,
**characterized in that**
the repair marker is formed straight from the mould.

2. Vehicle component (10) according to Claim 1, **characterized in that**
the repair marker is in the form of a local projection (11) and/or a local depression (12) of pure matrix material.

3. Method for repairing a damaged vehicle component (10) made of fibre-reinforced plastic comprising the following steps:
- identifying a damaged region (20),
- identifying repair markers (11), which separate the damaged region (20) from undamaged regions (21),
- detaching the damaged region (20) at the repair marker (11),
- inserting a repair part (20R) and
- connecting the repair part (20R) to the undamaged regions (21),
**characterized in that**
the repair marker is formed straight from the mould.

4. Method according to Claim 3, **characterized in that** the damaged region (21) is detached by mechanically severing the vehicle component (10) along repair markers (11), in particular by sawing, cut-off grinding, waterjet cutting or lasering.

5. Method according to either of Claims 3 and 4, **characterized in that**
the repair part (20R) is introduced in abutment between the undamaged regions (21) of the vehicle component (10).

6. Method according to either of Claims 3 and 4, **characterized in that**
the repair part (20R) is connected to the undamaged regions (21) of the vehicle component (10) such that it overlaps them at least in certain portions.

## Revendications

1. Composant de véhicule (10) en matière plastique renforcée par des fibres avec :
- une matrice en matériau thermodurcissable ou thermoplastique, et
- des fibres de renforcement, qui sont agencées dans la matrice,
au moins un marquage de réparation (11, 12) étant prévu sur la surface du composant de véhicule,
**caractérisé en ce que**
le marquage de réparation est réalisé à la sortie de l'outil.

2. Composant de véhicule (10) selon la revendication 1, **caractérisé en ce que**
le marquage de réparation est réalisé sous la forme d'une saillie locale (11) et/ou d'un creux local (12) en matériau de matrice pur.

3. Procédé de réparation d'un composant de véhicule (10) endommagé en matière plastique renforcée par des fibres, avec les étapes suivantes :
- l'identification d'une zone endommagée (20),
- l'identification de marquages de réparation (11) qui délimitent la zone endommagée (20) de zones non endommagées (21),
- la découpe de la zone endommagée (20) au niveau du marquage de réparation (11),
- l'insertion d'une pièce de réparation (20R), et
- la liaison de la pièce de réparation (20R) aux zones non endommagées (21),
**caractérisé en ce que**
le marquage de réparation est réalisé à la sortie de l'outil.

4. Procédé selon la revendication 3, **caractérisé en ce que**
la découpe de la zone endommagée (21) s'effectue par découpe mécanique du composant de véhicule (10) le long de marquages de réparation (11), notamment par sciage, tronçonnage, découpe au jet d'eau ou laser.

5. Procédé selon l'une quelconque des revendications 3 ou 4, **caractérisé en ce que**
la pièce de réparation (20R) est introduite bout à bout entre les zones non endommagées (21) du composant de véhicule (10).

6. Procédé selon l'une quelconque des revendications 3 ou 4, **caractérisé en ce que**
la pièce de réparation (20R) est reliée aux zones non endommagées (21) du composant de véhicule (10) de telle sorte qu'elle les chevauche au moins par sections.
